# EUROPEAN PATENT SPECIFICATION

(11) **EP 3 827 240 B1**
(45) Date of publication and mention of the grant of the patent: **27.08.2025**
(21) Application number: 19773204.3
(22) Date of filing: 11.07.2019
(51) Int. Cl.: G01M 3/22, G01M 3/28, G01M 3/32

(54) **DEVICE AND METHOD FOR AUTOMATED TIGHTNESS TESTING AND INERTISATION OF CONTAINERS OR SIMILAR RECEPTACLES HAVING A COVER AND/OR VALVE**
VORRICHTUNG UND VERFAHREN ZUR AUTOMATISIERTEN DICHTHEITSPRÜFUNG UND INERTISIERUNG VON BEHÄLTERN ODER ÄHNLICHEN BEHÄLTERN MIT EINEM DECKEL UND / ODER VENTIL
DISPOSITIF ET PROCÉDÉ DE TEST D'ÉTANCHÉITÉ AUTOMATISÉ ET D'INERTISATION DE RÉCIPIENTS OU DE RÉCEPTACLES SIMILAIRES AYANT UN COUVERCLE ET/OU UNE SOUPAPE

(30) Priority: 23.07.2018 SI 201800162
(43) Date of publication of application: 02.06.2021
(73) Proprietor: Brinox, D.O.O., 1215 Medvode (SI)
(72) Inventor: POTOCNIK, Rok, 4000 Kranj (SI)
(74) Representative: Pipan, Marjan
(86) International application number: PCT/SI2019/050012
(87) International publication number: WO 2020/022963

(56) References cited:
- JP-A- 2006 098 193
- JP-A- 2010 245 363
- JP-A- 2011 226 906
- JP-A- H02 205 739

## Description

The object of the invention is a device and method for automated tightness testing and inertisation of containers or similar receptacles having a cover and/or valve, which allows for an automated tightness testing of containers or other similar receptacles having a cover and/or valve (hereinafter receptacles) to underpressure or overpressure, and inertisation of same, wherein the object of tightness testing is the cover and/or valve arranged on the receptacle. The operations of a tightness and inertisation test are separate and can be performed completely independently of each other, yet are carried out on the same device.

The technical problem solved by the described device is an automated execution of tightness testing and inertisation with the same device, wherein, in case of the tightness testing of receptacles, automated inertisation and, if necessary, elimination of the leaky receptacles is carried out, wherein the sequence of testing also allows for the identification of a leaky site on the receptacle. The purpose of the automated inertisation of a receptacle is to displace a certain amount of oxygen from it, thereby eliminating a possibility of an explosion when, for instance, filling the receptacle, and at the same time avoiding possible contamination - oxidation of the product fed into the receptacle, if the product should not be exposed to the atmosphere or an excessive oxygen concentration.

The tightness of a receptacle is controlled by measuring the change in the preset pressure present within the controlled space controlled by the device. In case of leakage, the results can be further analysed to determine the threshold value of the pressure, at which the receptacle is still tight, and the rate of leakage. inertisation of receptacles is carried out by inert gas flushing to reach the desired preset oxygen content measured at the receptacle's outlet. Based on the determined leakage rate, a time period, in which the level of inertisation in a receptacle is still appropriate, can be anticipated.

Similar devices already exist and are described, for example, in patent documents EP2801392, EP3174066, EP0120271, wherein said solutions do not allow for a preliminary verification of tightness of an enclosed target space, container or similar receptacles; they are rather configured to carry out only one method which only allows for the inertisation of the target space, container or similar receptacles, without prior testing these receptacles for leakage. A problem that can arise is the leakage of the inert gas supplied, thereby reducing the inertness of a receptacle to inert gas.

Furthermore, said devices disclosed in the aforementioned inventions are permanently attached to a container in order to detect the oxygen concentration in the container or a similar receptacle and to supply inert gas to maintain the desired inert atmosphere at the desired time interval. The document JP2011226906A discloses a device for automated tightness testing of a container according to the state of the art.

In the present invention, the device and the associated method combine the functions of an automated tightness testing and inertisation of containers or similar receptacles, which ensures adequate tightness, namely that a change in a preset pressure in a container at a given time is less than required. Once the inertisation method, which may follow, is over, less than a certain percentage of oxygen in the container is provided at a predetermined time interval.

The device and method for automated tightness testing and inertisation of containers or similar receptacles having a cover and/or valve and its functioning will be explained on the basis of an embodiment and accompanying drawings, in which:
- Figure 1: shows a container or a similar receptacle arranged on a support frame;
- Figure 2: shows a tightness test of a bottom and an upper cap;
- Figure 3: shows a tightness test of a cover from the inside;
- Figure 4: shows a tightness test of a cover from the outside;
- Figure 5: shows a tightness test of a valve from the inside;
- Figure 6: shows a tightness test of a valve from the outside;
- Figure 7: shows the method of inertisaton of a receptacle.

### List of references used in Figures:

0 Receptacle
1 Support frame
2 Bottom cap
3 Column provided with a lifting mechanism
4 Upper cap support
5 Upper cap
6 Bottom connecting pipe for tightness test
7 Inertisation connecting pipe
8 Bottom relief connecting pipe
9 Bottom pressure gauge
10 Valve opening/closing mechanism
11 Receptacle's valve
12 Seal of receptacle's valve
13 Bottom cap seal
14 Upper connecting pipe for tightness test
15 Upper connecting pipe for relief and oxygen content measurement
16 Oxygen meter
17 Upper pressure gauge
18 Receptacle's cover
19 Cover opening/closing mechanism
20 Receptacle's cover seal
21 Upper cap seal
22 Connecting pipe valve

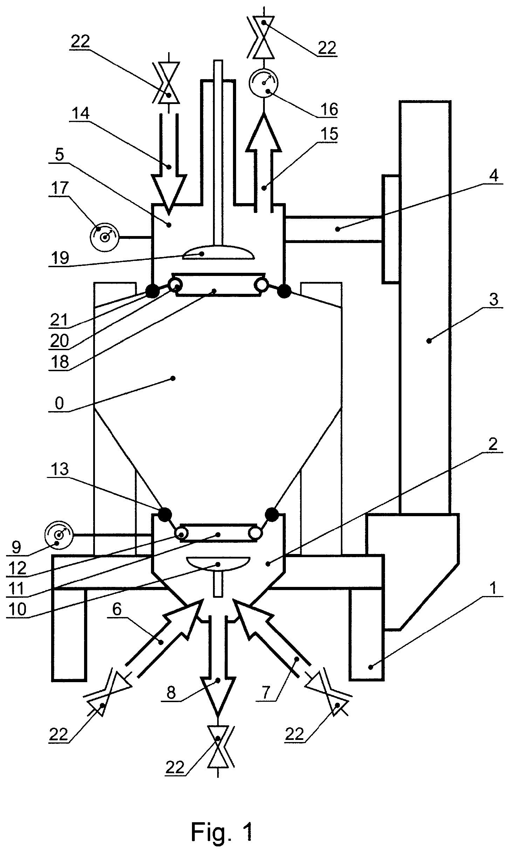

The structure of the device is shown in Figure 1. The device consists of a support frame 1 which serves to put a receptacle 0 onto the device. A bottom cap 2 and a column 3 provided with a lifting mechanism are attached to the support frame 1. The bottom cap 2 accommodates a valve opening/closing mechanism 10 on the receptacle 0, said bottom cap being further provided with a bottom connecting pipe 6 for tightness test, a connecting pipe 7 for inertisation, a bottom relief connecting pipe 8, and a bottom pressure gauge 9. To the lifting mechanism arranged on the column 3, an upper cap support 4 is fastened and an upper cap 5 is fastened to the latter. The upper cap 5 houses a cover opening/closing mechanism 19, and an upper connecting pipe 14 for tightness test, an upper connecting pipe 15 for relief and measurement of oxygen content, and an an upper pressure gauge 17 are attached to said upper cap (5). To measure the oxygen content, an oxygen meter 16 is attached to the upper relief connecting pipe 15. The tightness between the bottom cap 2 and the receptacle 0 is provided by a seal 13 of the bottom cap, which is located on the bottom cap 2, while the tightness between the upper cap 5 and the receptacle 0 is provided by a seal 21 located on the upper cap 5. The tightness of a valve 11 of the receptacle 0 is provided by a valve seal 12, while the tightness of a cover 18 of the receptacle 0 is provided by a seal 20 of the receptacle's cover. All connecting pipes 6, 7, 8, 14, 15 on the upper and bottom caps 5, 2 are fitted with valves 22 which ensure the tightness of the connecting pipes 6, 7, 8, 14, 15 in the tightness test of the receptacle 0.

The purpose of the tightness test of a receptacle is to verify whether the cover 18 of the receptacle 0 or the cover seal 20 of the receptacle 0 and the valve 11 of the receptacle 0 or the valve seal 12 of the receptacle 0 provide for an appropriate tightness, which means that the change in a preset pressure in the receptacle 0 is less than required in a given time period. Both the overpressure and the underpressure in the interior of the receptacle 0 are tested, the underpressure in the receptacle 0 being simulated by the overpressure on the external side of the cover 18 of the receptacle 0 or the valve 11 of the receptacle 0, i.e. by the overpressure in the bottom cap 2 or the upper cap 5.

The measurement of a potential leakage is carried out by monitoring the change in the air pressure in the control volume, i.e. in the part of the receptacle or device, in which some overpressure is established for testing purposes, with pressure gauges 9, 17, one on the bottom cap 2 and one on the upper cap 5. The pressure gauges 9, 17 measure the relative change in the pressure over a given period of time. Which gauge is monitored in a certain step depends on an individual partial test that is described hereinbelow.

A tightness test can begin when the receptacle 0 is adequately positioned on the support frame 1, the upper cap 5 is lowered to an appropriate height so that it rests on the cover 18 of the receptacle. A tightness test consisting of five partial tests is described below - there may be less partial tests, if necessary, for example, if only the valve 11 of the receptacle 0 is present on the receptacle, without the cover 18 of the receptacle 0 or vice versa. Upon completion of the test, the cover opening/closing mechanism 19 in the upper cap 5 closes the cover 18 of the receptacle 0, then the upper cap support 4 with the upper cap 5 fastened thereon is moved to the uppermost position. The valve opening/closing mechanism 10 in the bottom cap 2 closes the valve of the receptacle 11.

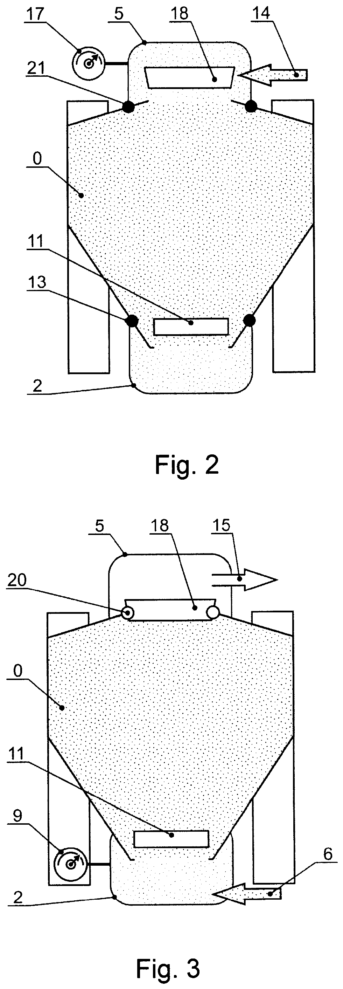

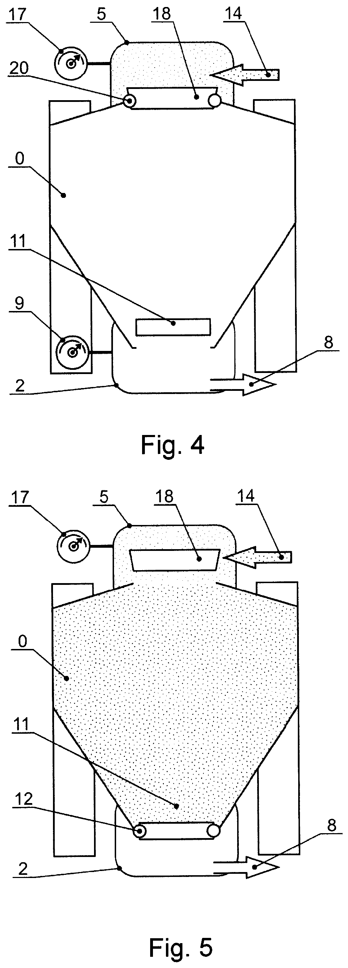

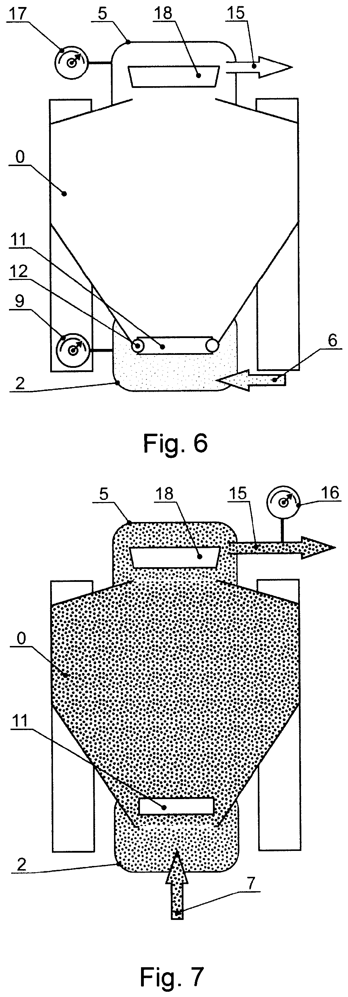

The entire test cycle consists of the following five partial tests:
1. Tightness test of the device and control of the bottom cap seal 13 and the upper cap seal 21 by simulation of overpressure in the bottom cap 2, upper cap 5 and the receptacle 0 - Figure 2.
   The bottom cap 2 and the upper cap 5 hermetically fit the receptacle 0, the receptacle valve 11 and the receptacle cover 18 are open. Prior to pressure buildup in the control volume, the relief valves 22 on the bottom connecting pipe 8 and on the upper connecting pipe 15 are opened so that normal air pressure is established within the receptacle or control volume, thereby eliminating the impact of possible overpressure or underpressure that might be present in the receptacle 0 prior to the performance of a test. In the control volume, i.e. in the receptacle 0, in the bottom cap 2 and in the upper cap 5, the desired pre-set pressure is established through one of the connecting pipes 6 or 14 for the tightness test. Potential leakage of the bottom cap seal 13 or the upper cap seal 21, i.e. the change in pressure in the control volume, is controlled by the bottom pressure gauge 9 or the upper pressure gauge 17.
2. Tightness test of the cover 18 of the receptacle 0 from the inside by simulation of overpressure within the receptacle 0 - Figure 3.
   The bottom cap 2 and the upper cap 5 hermetically fit the receptacle 0, the valve 11 of the receptacle 0 is open, the cover 18 of the receptacle 0 is closed. In the control volume, i.e. in the receptacle 0 and in the bottom cap 2, the desired pre-set pressure is established through the bottom connecting pipe 6 for the tightness test. Potential leakage of the seal 20 of the cover of the receptacle 0, i.e. the change in pressure in the control volume, is controlled by the bottom pressure gauge 9.
3. Tightness test of the cover 18 of the receptacle 0 from the outside by simulation of underpressure within the receptacle 0 - Figure 4.
   The bottom cap 2 and the upper cap 5 hermetically fit the receptacle 0, the valve 11 of the receptacle 0 is open, the cover 18 of the receptacle 0 is closed. In the control volume, i.e. in the upper cap 5, the desired pre-set pressure is established through the upper connecting pipe 14 for the tightness test. Potential leakage of the seal 20 of the cover 18 of the receptacle 0, i.e. the change in pressure in the control volume, is controlled by the upper pressure gauge 17 or alternatively by the bottom pressure gauge 9.
4. Tightness test of the valve 11 of the receptacle 0 from the inside by simulation of overpressure within the receptacle 0 - Figure 5.
   The bottom cap 2 and the upper cap 5 hermetically fit the receptacle 0, the valve 11 of the receptacle is closed, the cover 18 of the receptacle 0 is open. In the control volume, i.e. in the receptacle 0 and in the upper cap 5, the desired pre-set pressure is established through the upper connecting pipe 14 for the tightness test. Potential leakage of the seal 12 of the valve 11 of the receptacle 0, i.e. the change in pressure in the control volume, is controlled by the upper pressure gauge 17.
5. Tightness test of the valve 11 of the receptacle 0 from the outside by simulation of underpressure within the receptacle 0 - Figure 6.

The bottom cap 2 and the upper cap 5 hermetically fit the receptacle 0, the valve 11 of the receptacle 0 is closed, the cover 18 of the receptacle 0 is open. In the control volume, i.e. in the bottom cap 2, the desired pre-set pressure is established through the bottom connecting pipe 6 for the tightness test. Potential leakage of the seal 12 of the valve 11 of the receptacle 0, i.e. the change in pressure in the control volume, is controlled by the bottom pressure gauge 9 or alternatively by the upper pressure gauge 17.

Upon completion of the entire set of tests, the upper cap 5, together with the support 4 of the upper cap 5, is moved to the uppermost position and the receptacle 0 is prepared to be detached from the support frame 1.

The purpose of inertisation of the receptacle 0 with an inert gas, e.g. nitrogen, is to provide a certain desired oxygen concentration in the closed receptacle 0, which is important both in terms of explosion hazard and keeping the empty receptacle 0 clean for further use in the production process. An appropriately low oxygen concentration in an empty closed receptacle 0 prevents an explosion hazard resulting for instance from a spark due to static charge when filling the receptacle 0, e.g. with powder, and further prevents oxidation of the product (such as active substances, tablets, etc.) stored in the receptacle 0.

Inertisation can be initiated when the receptacle 0 is properly arranged on the support frame 1, the upper cap 5 together with the upper cap 4 support is lowered to an appropriate height, the mechanism 19 for opening/closing the cover 18 of the receptacle 0 in the upper cap 5 opens the cover 18 of the receptacle 0, the mechanism 10 for opening/closing the valve 11 of the receptacle 0 in the bottom cap 2 opens the valve 11 of the receptacle 0. The method is schematically illustrated in Figure 7.

Inertisation is carried out through the inertisaton connecting pipe 7 attached to the bottom cap 2. An inert gas, such as nitrogen, is blown through the inertisation connection tube 7 into the bottom cap 2 and further into the receptacle 0 and into the upper cap 5 and finally through the upper connection tube 15 for relief and oxygen content measurement. The presence of oxygen is measured by the oxygen meter 16 located on the upper connecting pipe 15 for relief and oxygen content measurement, which is further attached to the upper cap 5. The time of inertisation depends on the capacity of the receptacle 0. Inertisation is successful when the oxygen concentration value drops below the set threshold. Once inertisaton is completed, the inert gas supply is discontinued, the cover 18 of the receptacle 0 is closed. If necessary, overpressure in established within the receptacle 0 and then the valve 11 of the receptacle 0 is closed.

Upon completion of the inertisation, the upper cap 5, together with the support 4 of the upper cap 5, is moved to the uppermost position and the receptacle 0 is prepared to be detached from the support frame 1.

## Claims

1. Device for automated tightness testing and inertisation of containers or
similar receptacles having a cover and/or valve,
consisting of a support frame (1)
which serves to receive a receptacle (0),
wherein a bottom cap (2) and a column (3) provided with a lifting mechanism are attached to the support frame (1) and an upper cap (5) fastened to an upper cap support (4) is attached to the lifting mechanism arranged on the column (3);
wherein the bottom cap (2) accommodates a valve opening/closing mechanism (10) on the receptacle (0), said bottom cap being further provided with a bottom connecting pipe (6) for tightness test,
a connecting pipe (7) for inertisation,
a bottom relief connecting pipe (8), and
a bottom pressure gauge (9),
the upper cap (5) houses a mechanism (19) for opening/closing the cover
and an upper connecting pipe (14) for tightness test, an upper connecting pipe (15) for relief and measurement of oxygen content,
and an upper pressure gauge (17), are attached to said upper cap (5)
while an oxygen meter (16) is attached to the upper relief connecting pipe (15) for measuring the oxygen content,
**characterised in that**
the bottom cap (2) is equipped with a seal (13) arranged between the bottom cap (2) and the receptacle (0), while the upper cap (5) is equipped with a seal (21) arranged between the upper cap (5) and the receptacle (0), wherein the tightness of the valve (11) is provided by a seal (12) and the tightness of the cover (18) of the receptacle (0) is provided by a seal (20).

2. Device according to claim 1,
**characterised in that**
it can be used to perform the functions of tightness testing and inertisation continuously or independently from one another.

3. Method for automated tightness testing of containers or similar receptacles having a cover and/or valve using the device of claim 1,
**characterised in that**
it is applicable to verify whether the cover (18) of the receptacle (0) or the cover seal (20) of the receptacle (0) and the valve (11) of the receptacle (0) or the valve seal (12) of the receptacle (0) provide for an appropriate tightness, which means that the change in a preset pressure in the receptacle (0) is less than required in a given period of time, wherein both the overpressure and the underpressure in the interior of the receptacle (0) are tested, the underpressure in the receptacle (0) being simulated by overpressure on the external side of the cover (18) of the receptacle (0) or the valve (11) of the receptacle (0), i.e. by the overpressure in the bottom cap (2) or the upper cap (5).

4. Method for automated tightness testing of containers or similar receptacles having a cover and/or valve according to claim 3,
**characterised in that**
the entire test cycle includes at least one of the following partial tests:
tightness test of the device and control of the bottom cap (2) seal (13) and the upper cap (5) seal (21) by simulation of overpressure in the bottom cap (2), upper cap (5) and the receptacle (0);
tightness test of the cover (18) of the receptacle (0) from the inside
- by simulation of overpressure within the receptacle (0);
tightness test of the cover (18) of the receptacle (0) from the outside
- by simulation of underpressure within the receptacle (0);
tightness test of the valve (11) of the receptacle (0) from the inside
- by simulation of underpressure within the receptacle (0);
tightness test of the valve (11) of the receptacle (0) from the outside
- by simulation of underpressure within the receptacle (0).

5. Method according to claim 4,
**characterised in that**
the tightness test of the device and control of the bottom cap (2) seal (13) and the upper cap (5) seal (21)
- by simulation of overpressure in the bottom cap (2), upper cap (5) and the receptacle (0) is carried out in a way that the bottom cap (2) and the upper cap (5) hermetically fit the receptacle (0), the valve (11)_of the receptacle and the cover (18) of the receptacle being open, wherein, prior to pressure buildup in the control volume, the relief valves (22) on the bottom connecting pipe (8) and on the upper connecting pipe (15) are opened so that normal air pressure is established within the receptacle or control volume, thereby eliminating the impact of possible overpressure or underpressure that might be present in the receptacle (0) prior to the performance of a test, in the control volume, i.e. in the receptacle (0), in the bottom cap (2) and in the upper cap (5), the desired pre-set pressure is established through one of the connecting pipes (6) or (14) and potential leakage of the bottom cap (2) seal (13) or the upper cap (5) seal (21), i.e. the change in pressure in the control volume, is controlled by the bottom pressure gauge (9) or the upper pressure gauge (17).

6. Method according to claim 4,
**characterised in that**
the tightness test of the cover (18) of the receptacle (0) from the inside
- by simulation of overpressure within the receptacle (0) is carried out in a way that the bottom cap (2) and the upper cap (5) hermetically fit the receptacle (0), the valve (11) of the receptacle (0) is open, the cover (18) of the receptacle (0) is closed, in the control volume, i.e. in the receptacle (0) and in the bottom cap (2), the desired pre-set pressure is established through the bottom connecting pipe (6) for the tightness test and potential leakage of the seal (20) of the cover of the receptacle (0), i.e. the change in pressure in the control volume, is controlled by the bottom pressure gauge (9).

7. Method according to claim 4,
**characterised in that**
the tightness test of the cover (18) of the receptacle (0) from the outside
- by simulation of underpressure within the receptacle (0) is carried out in a way that the bottom cap (2) and the upper cap (5) hermetically fit the receptacle (0), the valve (11) of the receptacle (0) is open, the cover (18) of the receptacle (0) is closed, in the control volume, i.e. in the upper cap (5), the desired pre-set pressure is established through the upper connecting pipe (14) for the tightness test and potential leakage of the seal (20) of the cover (18) of the receptacle (0), i.e. the change in pressure in the control volume, is controlled by the upper pressure gauge (17) or alternatively by the bottom pressure gauge (9).

8. Method according to claim 4,
**characterised in that**
the tightness test of the valve (11) of the receptacle (0) from the inside
- by simulation of underpressure within the receptacle (0) is carried out in a way that the bottom cap (2) and the upper cap (5) hermetically fit the receptacle (0), the valve (11) of the receptacle is closed, the cover (18) of the receptacle (0) is open, in the control volume, i.e. in the receptacle (0) and the upper cap (5), the desired pre-set pressure is established through the upper connecting pipe (14) for the tightness test and potential leakage of the seal (12) of the valve (11) of the receptacle (0), i.e. the change in pressure in the control volume, is controlled by the upper pressure gauge (17).

9. Method according to claim 4,
**characterised in that**
the tightness test of the valve (11) of the receptacle (0) from the outside
- by simulation of underpressure within the receptacle (0) is carried out in a way that the bottom cap (2) and the upper cap (5) hermetically fit the receptacle (0), the valve (11) of the receptacle (0) is closed, the cover (18) of the receptacle (0) is open, in the control volume, i.e. in the bottom cap (2), the desired pre-set pressure is established through the bottom connecting pipe (6) for the tightness test and potential leakage of the seal (12) of the valve (11) of the receptacle (0), i.e. the change in pressure in the control volume, is controlled by the bottom pressure gauge (9) or alternatively by the upper pressure gauge (17).

10. Method for inertisation of containers or similar receptacles having a cover and/or valve using the device of claim 1,
**characterised in that**
inertisation is carried out in a way that an inert gas, such as nitrogen, is blown through the inertisation connection tube (7) fastened to the bottom cap (2) and further into the receptacle (0) and into the upper cap (5) and finally through the upper connection tube (15) for relief and oxygen content measurement, wherein the presence of oxygen is measured by the oxygen meter (16) located on the upper connecting pipe (15) which is further attached to the upper cap (5), wherein the time of inertisation depends on the volume of the receptacle (0) and inertisation is successful when the oxygen concentration value drops below the set threshold.

## Patentansprüche

1. Vorrichtung zur automatisierten Dichtigkeitsprüfung und Inertisierung von Behältern oder ähnlichen Gefäßen mit einem Deckel und/oder einem Ventil, die zum Aufnehmen eines Behälters (0) dient, wobei ein Bodenverschluss (2) und eine Säule (3) mit einem Hubmechanismus an einem Tragrahmen (1) befestigt sind, wobei der Tragrahmen (1) ferner einen oberen Verschluss (5) aufweist, der an einem oberen Verschlusshalter (4) befestigt ist, und wobei der obere Verschlusshalter (4) an dem auf der Säule (3) angeordneten Hubmechanismus angebracht ist,
wobei der Bodenverschluss (2) einen Öffnungs-/Schließmechanismus (10) für das Ventil des Behälters (0) aufnimmt. Der Bodenverschluss ist ferner mit einem unteren Anschlussrohr (6) für die Dichtigkeitsprüfung, einem Anschlussrohr (7) zur Inertisierung, einem unteren Entlastungsanschlussrohr (8) sowie einem unteren Manometer (9) versehen.
Der obere Verschluss (5) enthält einen Mechanismus (19) zum Öffnen und Schließen des Deckels. Ein oberes Anschlussrohr (14) zur Dichtigkeitsprüfung, ein oberes Anschlussrohr (15) zur Entlastung und zur Messung des Sauerstoffgehalts sowie ein oberes Manometer (17) sind am oberen Verschluss (5) angebracht. Ein Sauerstoffmessgerät (16) ist am oberen Entlastungsanschlussrohr (15) zur Messung des Sauerstoffgehalts angebracht,
**dadurch gekennzeichnet, dass**
der Bodenverschluss (2) mit einer Dichtung (13) ausgestattet ist, die zwischen dem Bodenverschluss (2) und dem Behälter (0) angeordnet ist, während der obere Verschluss (5) eine Dichtung (21) aufweist, die zwischen dem oberen Verschluss (5) und dem Behälter (0) angeordnet ist. Die Dichtheit des Ventils (11) wird durch eine Dichtung (12) und die Dichtheit des Deckels (18) des Behälters (0) durch eine Dichtung (20) gewährleistet.

2. Vorrichtung nach Anspruch 1,
**dadurch gekennzeichnet, dass**
sie zur Durchführung der Dichtigkeitsprüfung und der Inertisierung entweder kontinuierlich oder unabhängig voneinander einsetzbar ist.

3. Verfahren zur automatisierten Dichtigkeitsprüfung von Behältern oder ähnlichen Gefäßen mit einem Deckel und/oder einem Ventil unter Verwendung der Vorrichtung nach Anspruch 1,
**dadurch gekennzeichnet, dass**
das Verfahren zur Überprüfung geeignet ist, ob der Deckel (18) bzw. die Deckeldichtung (20) und das Ventil (11) bzw. die Ventildichtung (12) des Behälters (0) eine ausreichende Dichtheit gewährleisten, was dadurch bestimmt wird, dass die Änderung eines voreingestellten Drucks im Behälter (0) innerhalb eines bestimmten Zeitraums geringer ist als ein zulässiger Schwellenwert, wobei sowohl Überdruck als auch Unterdruck im Inneren des Behälters (0) geprüft werden, und wobei der Unterdruck im Behälter (0) durch einen Überdruck auf der Außenseite des Deckels (18) bzw. des Ventils (11) simuliert wird, insbesondere durch Überdruck im Bodenverschluss (2) oder im oberen Verschluss (5).

4. Verfahren zur automatisierten Dichtigkeitsprüfung von Behältern oder ähnlichen Gefäßen mit einem Deckel und/oder einem Ventil nach Anspruch 3,
**dadurch gekennzeichnet, dass**
der gesamte Prüfzyklus mindestens einen der folgenden Teiltests umfasst:
- Dichtigkeitsprüfung der Vorrichtung und Kontrolle der Dichtung (13) des Bodenverschlusses (2) sowie der Dichtung (21) des oberen Verschlusses (5) durch Simulation von Überdruck im Bodenverschluss (2), im oberen Verschluss (5) und im Behälter (0);
- Dichtigkeitsprüfung des Deckels (18) des Behälters (0) von innen durch Simulation von Überdruck im Inneren des Behälters (0);
- Dichtigkeitsprüfung des Deckels (18) des Behälters (0) von außen durch Simulation von Unterdruck im Inneren des Behälters (0);
- Dichtigkeitsprüfung des Ventils (11) des Behälters (0) von innen durch Simulation von Unterdruck im Inneren des Behälters (0);
- Dichtigkeitsprüfung des Ventils (11) des Behälters (0) von außen durch Simulation von Unterdruck im Inneren des Behälters (0).

5. Verfahren nach Anspruch 4,
**dadurch gekennzeichnet, dass**
die Dichtigkeitsprüfung der Vorrichtung sowie die Kontrolle der Dichtung (13) des Bodenverschlusses (2) und der Dichtung (21) des oberen Verschlusses (5) durch Simulation von Überdruck im Bodenverschluss (2), im oberen Verschluss (5) und im Behälter (0) derart durchgeführt wird, dass der Bodenverschluss (2) und der obere Verschluss (5) hermetisch an den Behälter (0) angepasst werden, wobei das Ventil (11) und der Deckel (18) des Behälters (0) geöffnet sind, und wobei vor dem Druckaufbau im Kontrollvolumen die Entlastungsventile (22) am unteren Entlastungsanschlussrohr (8) und am oberen Anschlussrohr (15) geöffnet werden, sodass im Behälter (0) bzw. im Kontrollvolumen Normaldruck hergestellt wird,
wodurch ein möglicher Einfluss von Über- oder Unterdruck, der vor Beginn des Tests im Behälter (0) vorhanden sein könnte, beseitigt wird. Im Kontrollvolumen - d. h. im Behälter (0), im Bodenverschluss (2) und im oberen Verschluss (5) - wird der gewünschte voreingestellte Druck über eines der Anschlussrohre (6) oder (14) eingebracht. Ein mögliches Leck der Dichtung (13) des Bodenverschlusses (2) oder der Dichtung (21) des oberen Verschlusses (5), also eine Druckänderung im Kontrollvolumen, wird über das untere Manometer (9) oder das obere Manometer (17) überwacht.

6. Verfahren nach Anspruch 4,
**dadurch gekennzeichnet, dass**
die Dichtigkeitsprüfung des Deckels (18) des Behälters (0) von innen
- durch Simulation von Überdruck im Inneren des Behälters (0) derart durchgeführt wird, dass der Bodenverschluss (2) und der obere Verschluss (5) hermetisch an den Behälter (0) angepasst werden, das Ventil (11) des Behälters (0) geöffnet und der Deckel (18) geschlossen ist, wobei im Kontrollvolumen - d. h. im Behälter (0) und im Bodenverschluss (2) - der gewünschte voreingestellte Druck über das untere Anschlussrohr (6) zur Dichtigkeitsprüfung eingebracht wird, und ein mögliches Leck der Dichtung (20) des Deckels (18), also eine Druckänderung im Kontrollvolumen, über das untere Manometer (9) überwacht wird.

7. Verfahren nach Anspruch 4,
**dadurch gekennzeichnet, dass**
die Dichtigkeitsprüfung des Deckels (18) des Behälters (0) von außen
- durch Simulation von Unterdruck im Inneren des Behälters (0) so durchgeführt wird, dass der Bodenverschluss (2) und der obere Verschluss (5) hermetisch an den Behälter (0) angepasst werden, das Ventil (11) des Behälters (0) geöffnet ist, der Deckel (18) des Behälters (0) geschlossen ist, im Kontrollvolumen, d. h. im oberen Verschluss (5), wird der gewünschte voreingestellte Druck über das obere Anschlussrohr (14) zur Dichtigkeitsprüfung eingebracht, und ein mögliches Leck der Dichtung (20) des Deckels (18) des Behälters (0), d. h. die Druckänderung im Kontrollvolumen, wird über das obere Manometer (17) oder alternativ über das untere Manometer (9) überwacht.

8. Verfahren nach Anspruch 4,
**dadurch gekennzeichnet, dass**
die Dichtigkeitsprüfung des Ventils (11) des Behälters (0) von innen
- durch Simulation von Unterdruck im Inneren des Behälters (0) so durchgeführt wird, dass der Bodenverschluss (2) und der obere Verschluss (5) hermetisch an den Behälter (0) angepasst werden, das Ventil (11) des Behälters geschlossen ist, der Deckel (18) des Behälters (0) geöffnet ist, im Kontrollvolumen, d. h. im Behälter (0) und im oberen Verschluss (5), wird der gewünschte voreingestellte Druck über das obere Anschlussrohr (14) zur Dichtigkeitsprüfung eingebracht, und ein mögliches Leck der Dichtung (12) des Ventils (11) des Behälters (0), d. h. die Druckänderung im Kontrollvolumen, wird über das obere Manometer (17) überwacht.

9. Verfahren nach Anspruch 4,
**dadurch gekennzeichnet, dass**
die Dichtigkeitsprüfung des Ventils (11) des Behälters (0) von außen
- durch Simulation von Unterdruck im Inneren des Behälters (0) so durchgeführt wird, dass der Bodenverschluss (2) und der obere Verschluss (5) hermetisch an den Behälter (0) angepasst werden, das Ventil (11) des Behälters (0) geschlossen ist, der Deckel (18) des Behälters (0) geöffnet ist, im Kontrollvolumen, d. h. im Bodenverschluss (2), wird der gewünschte voreingestellte Druck über das untere Anschlussrohr (6) zur Dichtigkeitsprüfung eingebracht, und ein mögliches Leck der Dichtung (12) des Ventils (11) des Behälters (0), d. h. die Druckänderung im Kontrollvolumen, wird über das untere Manometer (9) oder alternativ über das obere Manometer (17) überwacht.

10. Verfahren zur Inertisierung von Behältern oder ähnlichen Gefäßen mit einem Deckel und/oder einem Ventil unter Verwendung der Vorrichtung nach Anspruch 1,
**dadurch gekennzeichnet, dass**
die Inertisierung derart durchgeführt wird, dass ein Inertgas, wie beispielsweise Stickstoff, über das am Bodenverschluss (2) befestigte Inertisierungsanschlussrohr (7) in den Behälter (0) eingeblasen wird, weiter in den oberen Verschluss (5) strömt und schließlich über das obere Anschlussrohr (15) zur Entlastung und zur Messung des Sauerstoffgehalts austritt, wobei die Anwesenheit von Sauerstoff durch das am oberen Anschlussrohr (15) angeordnete Sauerstoffmessgerät (16) gemessen wird, und wobei die Dauer der Inertisierung vom Volumen des Behälters (0) abhängt und die Inertisierung dann als erfolgreich gilt, wenn der gemessene Sauerstoffgehalt unter einen voreingestellten Schwellenwert fällt.

## Revendications

1. Dispositif pour le contrôle automatisé de l'étanchéité et l'inertisation des conteneurs ou récipients similaires munis d'un couvercle et/ou d'une soupape,
composé d'un cadre de support (1)
qui sert à recevoir un récipient (0),
dans lequel un bouchon inférieur (2) et une colonne (3) pourvue d'un mécanisme de levage sont fixés au cadre de support (1) et un bouchon supérieur (5) fixé à un support de bouchon supérieur (4) est fixé au mécanisme de levage disposé sur la colonne (3);
dans lequel le bouchon inférieur (2) reçoit un mécanisme d'ouverture/fermeture de soupape (10) sur le récipient (0), ledit bouchon inférieur étant en outre pourvu d'un tuyau de raccordement inférieur (8) pour l'essai d'étanchéité,
un tuyau de raccordement (7) pour l'inertisation,
un tuyau de raccordement de la décharge de fond (8),
et un manomètre de fond (9),
le bouchon supérieur (5) abrite un mécanisme (19) d'ouverture/fermeture du couvercle
et un tuyau de raccordement supérieur (14) pour le test d'étanchéité, un tuyau de raccordement supérieur (15) pour la décharge et la mesure de la teneur en oxygène, et un manomètre supérieur (17), sont fixés audit bouchon supérieur (5) tandis qu'un compteur d'oxygène (16) est fixé au tuyau de raccordement supérieur (15) pour mesurer la teneur en oxygène,
**caractérisé par le fait**
**que** le bouchon inférieur (2) est muni d'un joint (13) disposé entre le bouchon inférieur (2) et le récipient (0), tandis que le bouchon supérieur (5) est muni d'un joint (21) disposé entre le bouchon supérieur (5) et le récipient (0), l'étanchéité de la soupape (11) étant assurée par un joint (12) et l'étanchéité du couvercle (18) du récipient (0) étant assurée par un joint (20).

2. Dispositif selon la revendication n° 1,
**caractérisé par le fait**
**qu'**il peut être utilisé pour réaliser les fonctions de contrôle d'étanchéité et d'inertisation en continu ou indépendamment l'une de l'autre.

3. Méthode de contrôle automatisé de l'étanchéité de conteneurs ou de récipients similaires dotés d'un couvercle et/ou d'une soupape, utilisant le dispositif de la revendication n° 1,
**caractérisée par le fait**
**qu'**il permet de vérifier si le couvercle (18) du récipient (0) ou le joint du couvercle (20) du récipient (0) et la soupape (11) du récipient (0) ou le joint de la soupape (12) du récipient (0) assurent une étanchéité appropriée, c'est-à-dire que la variation d'une pression prédéfinie à l'intérieur du récipient (0) est inférieure à la pression requise dans un laps de temps donné, dans lequel la surpression et la dépression à l'intérieur du récipient (0) sont testées, la dépression dans le récipient (0) étant simulée par une surpression sur le côté extérieur du couvercle (18) du récipient (0) ou de la soupape (11) du récipient (0), c'est-à-dire par la surpression dans le couvercle (18) du récipient (0) ou de la soupape (11) du récipient (0), c'est-à-dire par la surpression dans le couvercle (18) du récipient (0). c'est-à-dire par la surpression dans le bouchon inférieur (2) ou le bouchon supérieur (5).

4. Méthode de contrôle automatisé de l'étanchéité des conteneurs ou récipients similaires munis d'un couvercle et/ou d'une soupape selon la revendication n° 3,
**caractérisée par le fait**
**que** le cycle d'essai complet comprend au moins l'un des essais partiels suivants : essai d'étanchéité du dispositif et contrôle du joint (13) du bouchon inférieur (2) et du joint (21) du bouchon supérieur (5)
par simulation de la surpression dans le bouchon inférieur (2), le bouchon supérieur (5) et le récipient (0) ;
épreuve d'étanchéité du couvercle (18) du récipient (0) de l'intérieur
- par simulation d'une surpression à l'intérieur du récipient (0) ;
essai d'étanchéité du couvercle (18) du récipient (0) de l'extérieur
- par simulation d'une dépression à l'intérieur du récipient (0) ;
épreuve d'étanchéité de la soupape (11) du récipient (0) de l'intérieur
- par simulation d'une dépression à l'intérieur du récipient (0) ;
épreuve d'étanchéité de la soupape (11) du récipient (0) de l'extérieur
- par simulation d'une dépression à l'intérieur du récipient (0)

5. Méthode selon la revendication n° 4,
**caractérisée par le fait**
**que** l'épreuve d'étanchéité du dispositif et le contrôle du joint (13) du bouchon inférieur (2) et du joint (21) du bouchon supérieur (5)
- par simulation de la surpression dans le bouchon inférieur (2), le bouchon supérieur (5) et le récipient (0), de telle sorte que le bouchon inférieur (2) et le bouchon supérieur (5) s'adaptent hermétiquement au récipient (0), la soupape (11) du récipient et le couvercle (18) du récipient étant ouverts, où, avant la montée en pression dans le volume de contrôle, les soupapes de sûreté (22) sur le tuyau de raccordement inférieur (8) sont ouvertes pour que la pression d'air normale soit crée dans le récipient ou le volume de contrôle, éliminant ainsi l'effet d'une éventuelle surpression ou dépression qui pourrait être présente dans le récipient (0) avant l'exécution d'une épreuve, dans le volume de contrôle, c'est-à-dire dans le récipient (0), dans le bouchon inférieur (2) et dans le bouchon supérieur (5), la pression prédéterminée souhaitée est établie par l'un des tuyaux de raccordement (6) ou (14) et la fuite potentielle du joint (13) du bouchon inférieur (2) ou du joint (21) du bouchon supérieur (5), c'est-à-dire le changement de pression dans le volume de contrôle, est contrôlée par le manomètre inférieur (9) ou par le manomètre supérieur (17).

6. Méthode selon la revendication n° 4,
**caractérisée par le fait**
**que** l'épreuve d'étanchéité du couvercle (18) du récipient (0) de l'intérieur
- par simulation d'une surpression à l'intérieur du récipient (0) est effectué de telle sorte que le bouchon inférieur (2) et le bouchon supérieur (5) s'adaptent hermétiquement au récipient (0), que la soupape (11) du récipient (0) soit ouverte, que le couvercle (18) du récipient (0) soit fermé, dans le volume de contrôle, c'est à dire dans le récipient (0) et dans le bouchon inférieur (2), la pression prédéterminée souhaitée est établie par le tuyau de raccordement inférieur (6) pour l'épreuve d'étanchéité et la fuite potentielle du joint (20) du couvercle du récipient (0), c'est-à-dire le changement de pression dans le volume de contrôle, est contrôlée par le manomètre inférieur (9).

7. Méthode selon la revendication n° 4,
**caractérisée par le fait**
**que** l'épreuve d'étanchéité du couvercle (18) du récipient (0) de l'extérieur
- par simulation d'une dépression à l'intérieur du récipient (0) est effectué de telle sorte que le bouchon inférieur (2) et le bouchon supérieur (5) s'adaptent hermétiquement au récipient (0), que la soupape (11) du récipient (0) soit fermée, que le couvercle (18) du récipient (0) soit fermé, c'est-à-dire dans le bouchon supérieur (5), la pression prédéterminée souhaitée est établie par le tuyau de raccordement supérieur (14) pour l'épreuve d'étanchéité et la fuite potentielle du joint (20) du couvercle (18) du récipient (0), c'est-à-dire le changement de pression dans le volume de contrôle, est contrôlée par le manomètre supérieur (17) ou alternativement par le manomètre inférieur (9).

8. Méthode selon la revendication n° 4,
**caractérisé par le fait**
**que** l'épreuve d'étanchéité de la valve (11) du récipient (0) de l'intérieur
- par simulation d'une dépression à l'intérieur du récipient (0) est effectué de telle sorte que le bouchon inférieur (2) et le bouchon supérieur (5) s'adaptent hermétiquement au récipient (0), que la soupape (11) du récipient (0) soit fermée, que le couvercle (18) du récipient (0) soit fermé, c'est-à-dire dans le récipient (0) et dans le bouchon supérieur (5), la pression prédéterminée souhaitée est établie par le tuyau de raccordement supérieur (14) pour l'épreuve d'étanchéité et la fuite potentielle du joint (12) de la soupape (11) du récipient (0), c'est-à-dire le changement de pression dans le volume de contrôle, est contrôlée par le manomètre supérieur (17).

9. Méthode selon la revendication n° 4,
**caractérisée par le fait**
**que** l'épreuve d'étanchéité de la valve (11) du récipient (0) de l'extérieur
- par simulation d'une dépression à l'intérieur du récipient (0) est effectué de telle sorte que le bouchon inférieur (2) et le bouchon supérieur (5) s'adaptent hermétiquement au récipient (0), que la soupape (11) du récipient (0) soit fermée, que le couvercle (18) du récipient (0) soit ouvert, dans le volume de contrôle, c'est-à-dire dans le bouchon inférieur (2), la pression prédéterminée souhaitée est établie par le tuyau de raccordement inférieur (6) pour l'épreuve d'étanchéité et la fuite potentielle du joint (12) de la soupape (11) du récipient (0), c'est-à-dire le changement de pression dans le volume de contrôle, est contrôlée par le manomètre inférieur (9) ou alternativement par le manomètre supérieur (17).

10. Méthode d'inertisation de conteneurs ou de récipients similaires munis d'un couvercle et/ou d'une soupape utilisant le dispositif de la revendication n° 1,
**caractérisée par le fait**
**que** l'inertisation est réalisée de manière à ce qu'un gaz inerte, tel que l'azote, soit soufflé à travers le tuyau de raccordement d'inertisation (7) fixé au bouchon inférieur (2), puis dans le récipient (0) et dans le bouchon supérieur (5) et enfin à travers le tuyau de raccordement supérieur (15) pour la décharge et la mesure de la présence d'oxygène étant mesurée par l'oxygénomètre (16) situé sur le tuyau de raccordement supérieur (15) qui est fixé au bouchon supérieur (5), la durée de l'inertisation dépendant du volume du récipient (0) et l'inertisation étant réussie lorsque la valeur de la concentration d'oxygène tombe en dessous du seuil fixé.
